# EUROPEAN PATENT APPLICATION

(11) **EP 4 447 395 A1**
(43) Date of publication of application: **16.10.2024**
(21) Application number: 21967190.6
(22) Date of filing: 08.12.2021
(51) Int. Cl.: H04L 41/0895

(54) **SERVER INTERNAL DATA TRANSFER DEVICE, SERVER INTERNAL DATA TRANSFER METHOD, AND PROGRAM**

(71) Applicant: Nippon Telegraph And Telephone Corporation, Chiyoda-ku Tokyo 100-8116 (JP)
(72) Inventor: OTANI, Ikuo, Musashino-shi, Tokyo 180-8585 (JP); FUJIMOTO, Kei, Musashino-shi, Tokyo 180-8585 (JP); SAITO, Shogo, Musashino-shi, Tokyo 180-8585 (JP)
(74) Representative: Dehns
(86) International application number: PCT/JP2021/045192
(87) International publication number: WO 2023/105692

(57) **Abstract**

A controller (100) that transmits data from a device including an accelerator (11) to an application (20) when the device is used for the application (20) includes: a packet arrival monitoring unit (110) that monitors communication between the device and an APP thread (15) corresponding to the application (20) and measures a packet arrival timing; and a polling control unit (120) that wakes up the APP thread (15) and causes the APP thread (15) to perform packet processing at the time of packet arrival at which the packet arrival monitoring unit (110) detects the packet arrival and causes the APP thread to sleep when there is no packet arrival.

## Description

### Technical Field

The present invention relates to an on-server data transmission device, an on-server data transmission method, and a program.

### Background Art

Systems are constructed and operated for individual services in the background such as a progress of virtualization technologies based on network functions virtualization (NFV). Also, service functions are divided into units of reusable modules from the above configuration in which a service is constructed for each service and are caused to operate in an independent virtual machine (VM, container, or the like) environment.

As a technology for forming a virtual machine, a hypervisor environment that includes Linux (registered trademark) and a kernel-based virtual machine (KVM) is known. In this environment, a host OS (an OS installed in a physical server is called a host OS) into which a KVM module is incorporated operates as a hypervisor in a memory area called a kernel space, which memory area is different from that for a user space. In this environment, a virtual machine operates in the user space, and a guest OS (an OS installed in a virtual machine is called a guest OS) operates in the virtual machine.

Unlike a physical server in which the host OS operates, the virtual machine in which the guest OS operates is designed so that all the hardware (HW) including a network device (typically an Ethernet (registered trademark) card device or the like) is register-controlled for interrupt processing from the HW to the guest OS and writing from the guest OS into the hardware. In such register control, notifications and processing that would normally be performed by physical hardware are emulated by software, and therefore performance is generally lower than that in the host OS environment.

To counter this performance degradation, there is a technology for reducing HW emulation from a guest OS to a host OS or an external process existing outside a virtual machine itself and thus enhancing communication performance and versatility with a high-speed and unified interface. As this technology, a device abstraction technology, that is, a quasi-virtualization technology, called virtio has been developed and already been incorporated into and is currently being used in many general-purpose OSs such as Linux (registered trademark) and FreeBSD (registered trademark) (see Patent Literature 1).

In virtio, data exchange through a queue designed with a ring buffer is defined by a queue operation as a transport for a single direction transmission of transmitted data, in regard to data input/output such as consoles, file input/output, and network communication. Communication between the guest OS and the outside of its own virtual machine can be implemented simply through an operation using a queue without executing hardware emulation, by preparing queues in the number and the size suitable for each device at a time of activation of the guest OS by using the specification of the virtio queue.

Data transmission technologies in the server include New API (NAPI), Data Plane Development Kit (DPDK), and Kernel Busy Poll (KBP).

The New API (NAPI) performs packet processing through a software interruption request after a hardware interruption request, upon arrival of a packet.

The DPDK implements a packet processing function in a user space in which an application operates, and performs immediate harvesting at the time of packet arrival from the user space in a polling model (see Non Patent Literature 1). Specifically, the DPDK is a framework for performing network interface card (NIC) control, which is conventionally performed by Linux kernel (registered trademark), in a user space. The largest difference from the processing in Linux kernel lies in having a polling-based reception mechanism called a pull mode driver (PMD). Normally, in Linux kernel, interruption occurs when data reaches the NIC, and reception processing is triggered by the interruption. On the other hand, in the PMD, a dedicated thread continuously performs data arrival confirmation and reception processing. High-speed packet processing can be performed by eliminating overheads such as context switches and interruptions. The DPDK greatly improves performance and a throughput of the packet processing, allowing more time to be secured for data plane application processing. However, the DPDK exclusively uses computer resources such as a central processing unit (CPU) and an NIC.

Non Patent Literature 2 describes an on-server network delay control device KBP (Kernel Busy Poll). The KBP constantly monitors packet arrivals by a polling model in the kernel. Thus, softIRQ (software Interrupt ReQuest) is suppressed, and low-latency packet processing is achieved.

Next, a DPDK system is described.

### [DPDK system configuration]

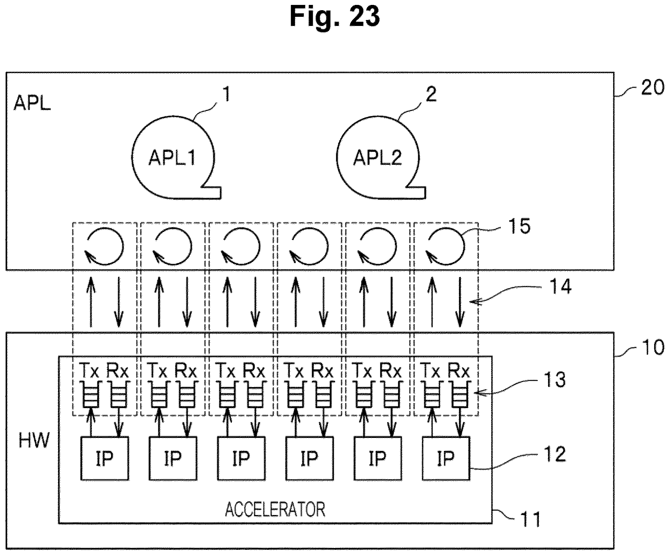

Fig. 23 is a diagram illustrating a configuration of a DPDK system that controls an HW 10 including an accelerator 11.

The DPDK system includes the HW 10, a packet processing application programming interface (API) 14, an application (APL) 20.

The APL 20 is packet processing performed prior to execution of the APL. The APL 20 includes an APL 1 and an APL 2 here.

The packet processing API 14 is an API in which the packet processing is offloaded toward the NIC or the accelerator. The packet processing API 14 is a high-speed data transmission middleware and works as a DPDK disposed in a user space.

The DPDK implements a packet processing function in the user space in which the APL 20 operates, and immediately performs harvesting from the user space, upon packet arrival monitored in the polling model, to allow a packet transmission delay to be reduced. In other words, because the DPDK performs packet harvesting, which means referring to content of the packets accumulated in a buffer and deleting a corresponding queue entry of the packet processing from the buffer in consideration of processing to be performed next, by polling (busy polling of a queue using the CPU), there is no waiting and the delay is small.

The HW 10 performs communication for data transmission/reception with the APL 1 and the APL 2. In the description below, the data flow in which the APL 1 and the APL 2 receive packets from the HW 10 is referred to as Rx-side reception, and the data flow in which the APL 1 and the APL 2 transmit packets to the HW 10 is referred to as Tx-side transmission.

The HW 10 includes an accelerator 11. Also, the HW 10 may include NICs (physical NICs) for connecting a communication network.

The accelerator 11 is calculation unit hardware that performs a specific operation at a high speed on the basis of an input from the CPU. Specifically, the accelerator 11 is a programmable logic device (PLD) such as a graphics processing unit (GPU) or a field programmable gate array (FPGA). In Fig. 23, the accelerator 11 includes a plurality of intellectual property cores (IP cores) 12 and a physical queue 13 including an Rx queue and a Tx queue that hold data in a first in first out list structure. The IP core 12 is design information of a reusable circuit component configuring a semiconductor such as an FPGA, an IC, or an LSI and is called a device core (core processor) in some cases.

A part of processing of the APL 1 and the APL 2 is offloaded in the accelerator 11 to achieve performance and power efficiency that cannot be achieved only by software (CPU processing).

There is assumed a case in which the accelerator 11 described above is applied to a large-scale server cluster such as a data center included in the network functions virtualization (NFV) or the software defined network (SDN).

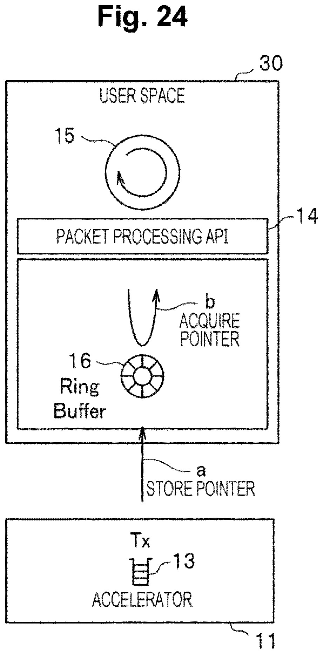

Existing applications (the APL 20, the APL 1, and the APL 2) that transmit data to the accelerator in a polling mode, such as a DPDK, operate by fixedly associating a physical queue 13 used by the applications at the time of initialization (see the dashed-line boxes in Fig. 23). An application thread (hereinafter referred to as an APP thread) performs transmission/reception processing via a ring buffer 16 (see Fig. 24) corresponding to the accelerator 11. The APP thread 15 is a Polling-Thread here.

Fig. 24 is a diagram for explaining the reception processing by polling of the DPDK system in Fig. 23.

The APP thread (Polling-Thread) 15 and the packet processing API 14 are located in a user space 30.

In the reception processing by polling, a pointer of data is stored in the ring buffer 16 when there is data to be transmitted (see the reference sign "a" in Fig. 24).

In order to reduce a delay from the accelerator 11, the APP thread 15 polls the ring buffer 16, and when there is data to be transmitted, the APP thread 15 acquires the pointer of the data and performs the reception processing (see the reference sign "b" in Fig. 24). At that time, the CPU usage rate of the APP thread 15 becomes 100% by polling, and power consumption increases.

In the DPDK, although the APP thread 15 polls packet arrival and a delay is thus small, power consumption increases. As illustrated in Fig. 23, influences of an increase in power consumption are significant in a case in which there are a plurality of applications APL 1 and APL 2.

### Citation List

### Patent Literature

Patent Literature 1: JP 2018-32156 A

### Non Patent Literature

Non Patent Literature 1: THE LINUX FOUNDATION PROJECTS DPDK, [online], [accessed November 5, 2021], Internet <http:// www.dpdk.org/>
Non Patent Literature 2: Kei Fujimoto, Kenichi Matsui, Masayuki Akutsu, "KBP: Kernel Enhancements for Low-Latency Networking without Application Customization in Virtual Server", IEEE CCNC 2021.

### Summary of Invention

### Technical Problem

However, packet transmission by the polling model has the following problem.

In DPDK, a kernel thread occupies a CPU core to perform polling (the busy polling of the queue using the CPU). Therefore, the DPDK constantly uses the CPU at 100% regardless of presence/absence of packet arrival, for example even in intermittent packet reception, and this may lead to a problem that power consumption increases.

KBP also has a problem similar to that of DPDK as described above. In other words, KBP can suppress softIRQ and achieve low-latency packet processing by constantly monitoring packet arrival by the polling model in the kernel. However, because the kernel thread that constantly monitors packet arrivals occupies the CPU core, and always uses the CPU time, there is the problem of an increase in power consumption.

The present invention has been made in view of such a background, and an object of the present invention is to reduce power consumption of a CPU used for data polling while reducing a delay of data transmission from an accelerator to an application when accelerator resources mounted in a physical server are used by a plurality of applications.

### Solution to Problem

In order to solve the aforementioned problem, the present invention provides an on-server data transmission device that transmits data from a device including an accelerator to an application when the device is used for the application, the on-server data transmission device including: a packet arrival monitoring unit that monitors communication between the device and an APP thread corresponding to the application and measures a packet arrival timing; and a polling control unit that wakes up the APP thread and causes the APP thread to perform packet processing at the time of packet arrival at which the packet arrival monitoring unit detects the packet arrival and causes the APP thread to sleep while there is no packet arrival.

### Advantageous Effects of Invention

According to the present invention, it is possible to reduce power consumption of a CPU used for data polling while reducing a delay of data transmission from an accelerator to an application when accelerator resources mounted in a physical server are used by a plurality of applications.

### Brief Description of Drawings

Fig. 1 is a schematic configuration diagram of an on-server data transmission system according to an embodiment of the present invention.
Fig. 2 is a block configuration diagram of the on-server data transmission system according to the embodiment of the present invention.
Fig. 3 is a diagram for explaining a sleep control operation of an APP thread of the on-server data transmission system according to the embodiment of the present invention.
Fig. 4 is a control sequence diagram of a sleep control operation of the APP thread in Fig. 3.
Fig. 5 is a diagram for explaining a communication proxy with an accelerator of the on-server data transmission system according to the embodiment of the present invention.
Fig. 6 is a diagram illustrating a correspondence table between a thread ID and a physical queue of a proxy unit of the on-server data transmission system according to the embodiment of the present invention.
Fig. 7 is a diagram illustrating a virtual queue table of the proxy unit of the on-server data transmission system according to the embodiment of the present invention.
Fig. 8 is a diagram illustrating a logical-physical mapping table of the proxy unit of the on-server data transmission system according to the embodiment of the present invention.
Fig. 9 is a diagram illustrating a physical queue table of the proxy unit of the on-server data transmission system according to the embodiment of the present invention.
Fig. 10 is a flowchart illustrating wake-up determination processing using packet arrival information in polling control of the on-server data transmission system according to the embodiment of the present invention.
Fig. 11 is a flowchart illustrating wake-up determination processing using timing information (statistics) in polling control of the on-server data transmission system according to the embodiment of the present invention.
Fig. 12 is a diagram illustrating a table of a packet timer of a virtual queue of the on-server data transmission system according to the embodiment of the present invention.
Fig. 13 is a diagram illustrating a threshold value table of the virtual queue of the on-server data transmission system according to the embodiment of the present invention.
Fig. 14 is a control sequence diagram of packet transmission of the on-server data transmission system according to the embodiment of the present invention.
Fig. 15 is a control sequence diagram of packet reception/polling of the on-server data transmission system according to the embodiment of the present invention.
Fig. 16 is a control sequence diagram of IP core scale-in of the on-server data transmission system according to the embodiment of the present invention.
Fig. 17 is a diagram for explaining the IP core scale-in in Fig. 16.
Fig. 18 is a flowchart illustrating logical-physical mapping table update processing of the on-server data transmission system according to the embodiment of the present invention.
Fig. 19 is a control sequence diagram of thread scale-in of the on-server data transmission system according to the embodiment of the present invention.
Fig. 20 is a diagram for explaining the thread scale-in of the on-server data transmission system according to the embodiment of the present invention.
Fig. 21 is a flowchart illustrating logical-physical mapping table update processing of the on-server data transmission system according to the embodiment of the present invention.
Fig. 22 is a hardware configuration diagram illustrating an example of a computer that implements functions of an on-server data transmission device of the on-server data transmission system according to the embodiment of the present invention.
Fig. 23 is a diagram illustrating a configuration of a DPDK system that controls HW including an accelerator.
Fig. 24 is a diagram for explaining reception processing using polling of the DPDK system in Fig. 23.

### Description of Embodiments

The following is description of an on-server data transmission system and the like according to a mode for carrying out the present invention (the mode is hereinafter referred to as "this embodiment"), with reference to the drawings.

### (Embodiment)

### [Overall configuration]

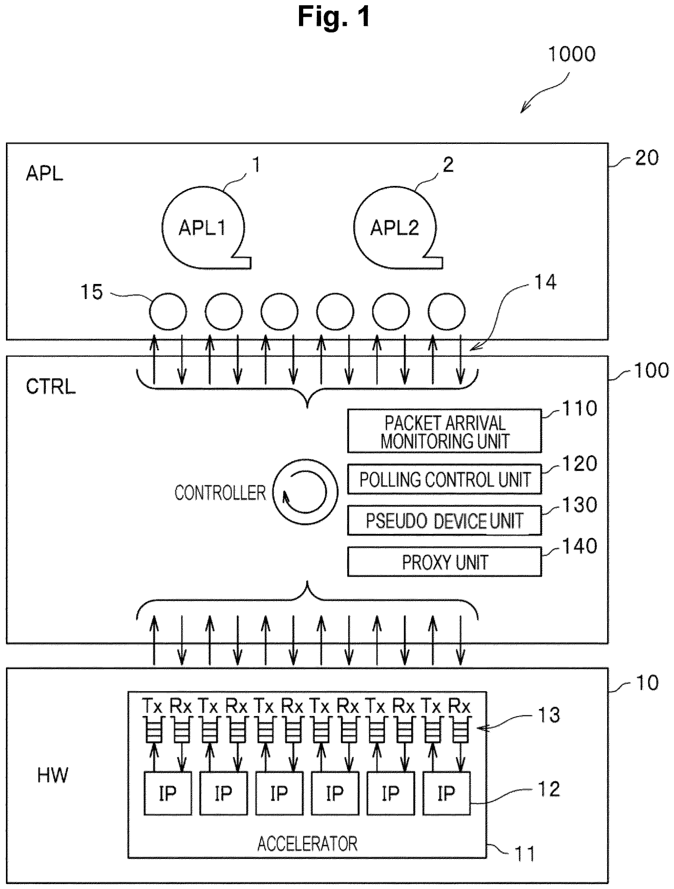

Fig. 1 is a schematic configuration diagram of an on-server data transmission system according to an embodiment of the present invention. The same components in Fig. 1 as those in Fig. 23 are denoted by the same reference signs as those in Fig. 23.

As illustrated in Fig. 1, an on-server data transmission system 1000 includes an HW 10, a packet processing API 14, a controller (CTRL)on-server 100, which is an on-server data transmission device, and an application (APL) 20.

The controller 100 is disposed between the application 20 and the HW 10. The packet processing API 14 is an API used when packet processing is offloaded toward an NIC or accelerators. Because the packet processing API 14 is disposed between the application 20 and the controller 100 in this configuration, the presence of the controller 100 is not seen when viewed from the application 20.

The controller 100 is an on-server data transmission device that transmits data from the device including accelerators 11 to the application 20 when the device is used for the application 20.

The controller 100 manages association between an APP thread 15 and the plurality of IP cores 12 of the accelerator 11 and communicates with the accelerator 11 instead of the application 20.

The controller 100 includes a packet arrival monitoring unit 110, a polling control unit 120, a pseudo device unit 130, and a proxy unit 140.

The packet arrival monitoring unit 110 monitors communication between the accelerator 11 (device) and the APP thread 15 and measures a packet arrival timing. In other words, a packet after processing between the accelerator 11 and the APP thread 15 rises for reception by the application, and the packet arrival monitoring unit 110 detects the packet arrival and measures the packet arrival timing from the accelerator 11.

The polling control unit 120 wakes up the APP thread 15 at the time of packet arrival when the packet arrival monitoring unit 110 detects packet arrival to promote packet processing and causes the APP thread to sleep when there is no packet.

Although the APP thread has been waked up and caused to perform the polling processing at 100% of time conventionally, the packet processing is stopped when it is not needed (the polling is stopped; the APP thread is caused to sleep). The polling control unit 120 wakes up the APP thread 15 only when the packet arrives.

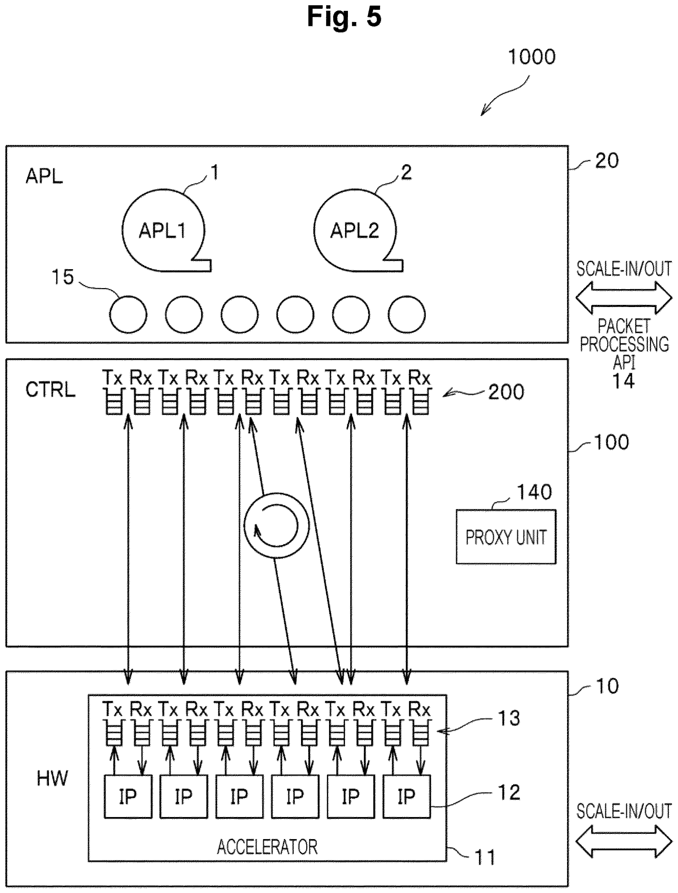

The pseudo device unit 130 is connected to the application 20 by an interface equivalent to the existing interface and provides the application 20 with a virtual queue 200 (see Fig. 5) instead of the physical queue 13 of the device.

The pseudo device unit 130 corresponds to a physical queue of the device and connects the device to the application 20 by causing the APP thread 15 to perform the packet processing using the virtual queue 200 instead of the physical queue.

The virtual queue 200 is a queue shown to the APP thread 15 instead of the physical queue 13.

It is desired that the application 20 looks like constantly using the accelerator 11 (constantly communicating with the accelerator 11), in other words, it is desired to hide the controller 100 from the accelerator 11. The pseudo device unit 130 is connected to the application 20 by an interface equivalent to the existing interface and provides the application 20 with the virtual queue 200 instead of the physical queue 13 of the device. This causes the application 20 to appear to be in constant communication with the accelerator 11.

The proxy unit 140 dynamically changes the connection between the virtual queue 200 and the physical queue 13.

When a packet arrives from the APP thread 15 through the virtual queue 200, the packet needs to be delivered to the accelerator 11, and the proxy unit 140 establishes connection between the virtual queue 200 and the physical queue 13.

The proxy unit 140 changes association of the physical queue 13 with the virtual queue 200 and provides an instruction to increase or decrease the IP core 12 and the APP thread 15 at the same time. The proxy unit 140 further associates a plurality of physical queues with one APP thread 15 (1:N) or associates one physical queue with a plurality of APP threads 15 (M:1) (N and M are arbitrary natural numbers).

### [On-server data transmission system]

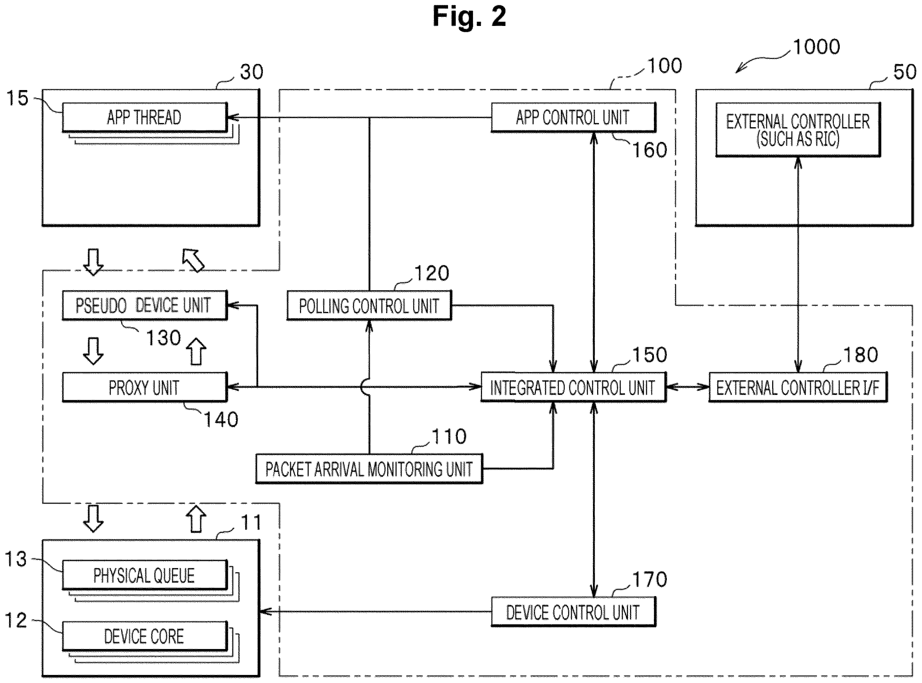

Fig. 2 is a block configuration diagram of the on-server data transmission system 1000 including the controller 100. The same components in Fig. 2 as those in Fig. 1 are denoted by the same reference signs as those in Fig. 1.

The on-server data transmission system 1000 includes the APP thread 15 disposed in the user space 30, the accelerator 11 including the plurality of physical queues 13 and IP cores 12, and the controller 100.

In addition, an external controller 50 such as a RAN Intelligent Controller (RIC) is connected to the on-server data transmission system 1000. The RIC is a component defined by software called a radio access network (RAN) architecture and implements control, optimization, and intelligentization of RAN functions.

A white arrow in Fig. 2 indicates a flow of data, and the controller 100 is interposed between the APP thread 15 and the accelerator 11 in the configuration when viewed from the flow of the data transmission/reception processing.

The controller 100 includes the packet arrival monitoring unit 110, the polling control unit 120, the pseudo device unit 130, the proxy unit 140, an integrated control unit 150, an APP control unit 160, a device control unit 170, and an external controller IF 180.

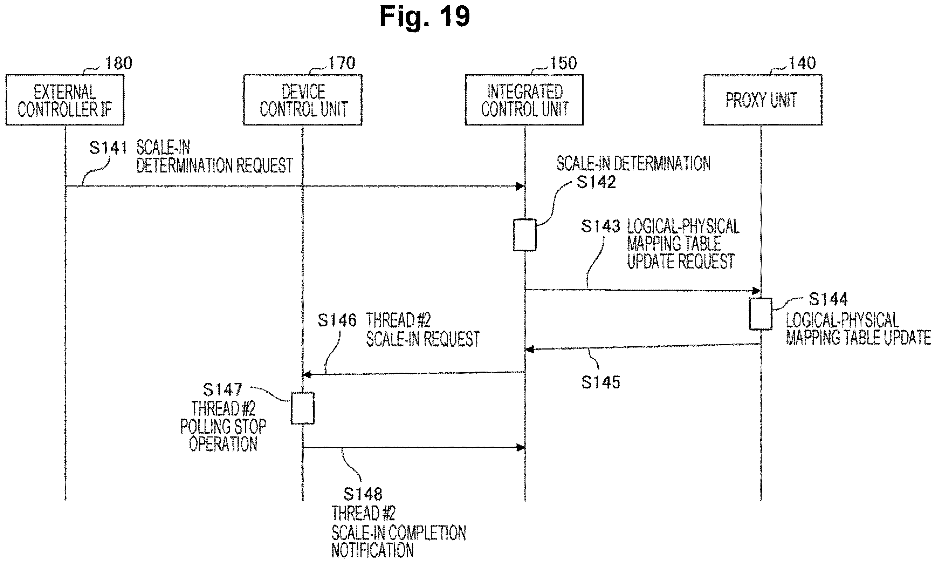

The integrated control unit 150 integrally controls each component. The integrated control unit 150 performs scale-in determination in response to a request from the external controller IF 180 (see Fig. 19, which is described below). Further, the integrated control unit 150 provides a "logical-physical mapping table update request" to the proxy unit 140 (see Fig. 19, which is described below). The integrated control unit 150 provides a scale-in request to the device control unit 170 (see Fig. 19, which is described below).

The APP control unit 160 controls the APP thread 15 in accordance with an instruction from the integrated control unit 150.

The device control unit 170 controls the accelerator 11 in accordance with an instruction from the integrated control unit 150.

The external controller IF 180 receives an instruction from the external controller 50.

Description is given below of operations of the on-server data transmission system configured as described above.

### [Sleep control operation of APP thread]

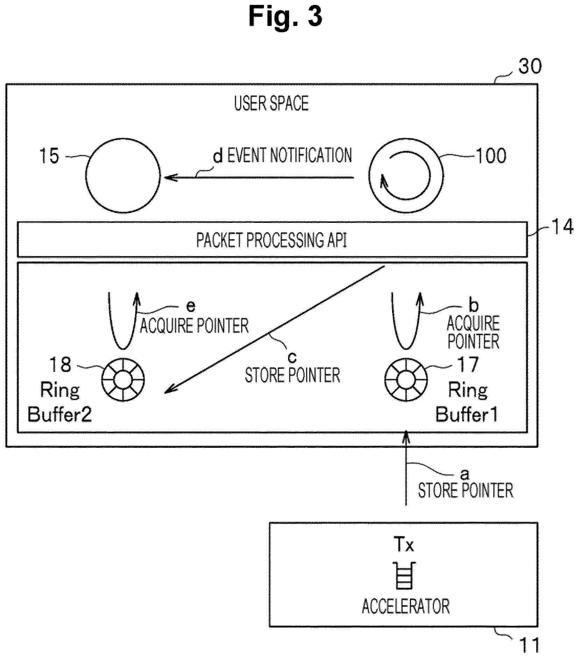

Fig. 3 is a diagram for explaining a sleep control operation of the APP thread. The same components as those in Figs. 1 and 24 are denoted by the same reference numerals.

The APP thread 15, the packet processing API 14, and the controller 100 is located in the user space 30.

In a case in which there are a plurality of applications APL 1 and APL 2 (see Fig. 1), an increase in power consumption is significant as described above. Thus, a sleep control operation of the APP thread in the case in which there are a plurality of applications APL 1 and APL 2 is described.

A plurality of the APP threads 15 are present for each of the plurality of applications APL 1 and APL 2.

The polling control unit 120 (see Fig. 1) of the controller 100 wakes up the APP thread 15 and prompts it to perform packet processing at the time of packet arrival and causes the APP thread 15 to sleep when there is no packet.

The packet arrival monitoring unit 110 (see Fig. 1) of the controller 100 monitors communication with the accelerator 11 and measures a timing of the packet arrival.

In reception processing based on polling, the packet arrival monitoring unit 110 (see Fig. 1) stores a pointer of data to be transmitted in the ring buffer 17 (ring buffer <1>) using a physical queue 41 (see the reference sign "a" in Fig. 3).

Incidentally, the APP thread 15 polls the ring buffer 16 and harvests the packet as illustrated in Fig. 24 in the conventional art.

On the other hand, in the present embodiment, the packet arrival monitoring unit 110 (see Fig. 1) uses the virtual queue 200 (see Fig. 5) instead of the APP thread 15 to poll the ring buffer 17, and acquires a pointer of the data(see the reference sign "b" in Fig. 3) and performs reception processing in a case in which there is data to be transmitted .

The proxy unit 140 stores the pointer of the data to be transmitted in the ring buffer 18 (ring buffer <2>) that equals to virtual queue 200 instead of the APP thread 15 (see the reference sign "c" in Fig. 3).

The polling control unit 120 notifies the APP thread 15 of an event (see the reference sign "d" in Fig. 3).

When there is data to be transmitted, the APP thread 15 acquires a pointer of the data by using the virtual queue 200 (see the reference sign "e" in Fig. 1).

Here, the packet arrival monitoring unit 110 performs polling of the physical queue 13 as a representative of all the APP threads 15. In this manner, it is possible to monitor the physical queue 13 only by the single packet arrival monitoring unit 110 even in a case in which there are the plurality of APP threads 15. In the case of Fig. 23, for example, processing for each of the plurality of (six) APP threads 15 is present in parallel with respect to the plurality of applications APL 1 and the APL 2, and there is a need to perform polling for the six APP threads 15 in the conventional example in Fig. 23. On the other hand, in the present embodiment, it is possible to monitor all the physical queues 13 only by the single packet arrival monitoring unit 110 polling all the physical queues 13 for the plurality of APP threads 15 that are present in parallel. Therefore, the power consumption can be reduced to 1/6 by simple calculation. The problem can be solved even if the polling cannot be completely eliminated.

As described above, the controller 100 monitors packet arrival at the accelerator 11 and polls the ring buffer 17 instead of the APP threads 15, as a representative.

The controller 100 notifies the APP threads 15 of the packet arrival by a meaning such as an event notification.

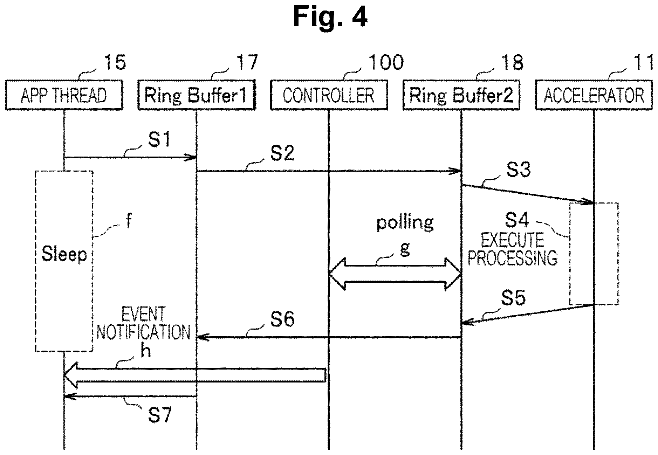

Fig. 4 is a control sequence diagram of the sleep control operation of the APP thread in Fig. 3.

The APP thread 15 notifies the ring buffer 17 of an accelerator execution request (S1), and the ring buffer 17 notifies a ring buffer 18 of this execution request (S2). The ring buffer 18 notifies the accelerator 11 of this execution request (S3).

Here, once the APP thread 15 notifies the ring buffer 17 of the accelerator execution request, the controller 100 causes the APP thread 15 to sleep (see the reference sign "f" in Fig. 4).

The accelerator 11 executes the request from the accelerator 11 (S4) and transmits the processing result to the ring buffer 18 (S5). The packet arrival monitoring unit 110 of the controller 100 monitors communication with the accelerator 11, and the controller 100 polls the ring buffer 18 between itself and the ring buffer 18 instead of the APP threads 15 (see reference sign "g" in Fig. 4).

The controller 100 notifies the APP threads 15 of the packet arrival by a method such as an event notification (see the reference sign "h" in Fig. 4).

The ring buffer 18 transmits the processing result to the ring buffer 17 (S6), and in a case in which there is a data transmission request from an APP thread 15 that has received the event notification and has woken up, the ring buffer 17 transmits the processing result of the accelerator 11 to the APP thread 15 (S7).

In this manner, the controller 100 can monitor the packet arrival from the accelerator 11 by polling as a representative. Therefore, it is not necessary for each of the APP threads 15 to monitor packet arrival by polling, and power consumption can be reduced.

Because the controller 100 can monitor the communication of all the APP threads 15, it is possible to enhance efficiency of the polling of all the APP threads 15 and to reduce power consumption of the entire server.

The on-server data transmission system 1000 can suppress a delay by a method such as providing an event notification from the controller 100 to the APP thread 15 at the time of packet arrival, providing an event notification on the basis of timing information obtained from statistical data regarding packet transmission/reception intervals, or the like.

### [Communication proxy with accelerator]

Fig. 5 is a diagram for explaining a communication proxy with the accelerator. The same components as those in Fig. 1 are denoted by the same reference signs as those in Fig. 1.

The controller 100 serves as a pseudo device having an interface that is equivalent to an existing interface and communicates with the application 20 such that the application 20 can handle the controller 100 similarly to the accelerator 11. At that time, the virtual queue 200 is provided to the application 20 instead of the physical queue 13.

The pseudo device unit 130 (Figs. 1 and 2) is connected to the application by an interface equivalent to the existing interface and provides the virtual queue 200 instead of the physical queue 13 of the device.

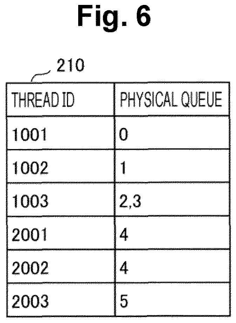

Fig. 6 is a diagram illustrating a correspondence table 210 between thread IDs of the proxy unit 140 and the physical queues 13.

A corresponding physical queue 13 is allocated for each thread ID "1001...". In a case in which there are physical queues (0 to 5) in order from the left IP core 12 of the accelerator 11 illustrated in Fig. 5, for example, the thread ID "1001" is allocated to the leftmost physical queue (0) of the IP cores 12 of the accelerator 11 illustrated in Fig. 5. It is also possible to allocate a plurality of physical queues to a thread ID. For example, the thread ID "1003" is allocated to the physical queues (2, 3) of the IP core 12 of the accelerator 11 illustrated in Fig. 5. This example is illustrated by the connection branched into the physical queues (2, 3) when seen from the virtual queue. Conversely, both the thread IDs "2001" and "2002" are allocated to the physical queue (4). This example is shown by consolidation of the connection to the physical queue (4).

Note that the thread IDs and the physical queues have one-to-one correspondence in the conventional art and there are no branching and consolidation as described above.

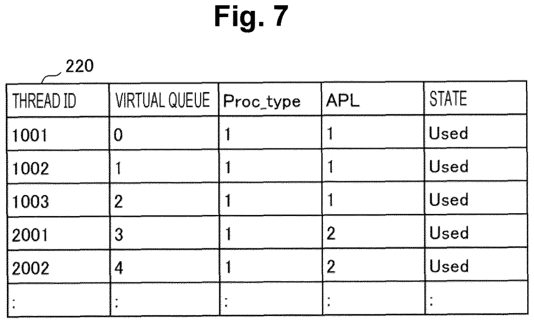

Fig. 7 is a diagram illustrating a virtual queue table 220 of the proxy unit 140.

The virtual queue table 220 describes to which virtual queues the thread IDs correspond.

The thread IDs and the virtual queues are in one-to-one correspondence. For example, the thread ID "1001" corresponds to the virtual queue (0), and the thread ID "1002" corresponds to the virtual queue (1). Note that the "Proc_type" (process type) defines what type of processing is desired to be performed by the accelerator. For example, Proc_type "1" is connectable to the IP core 12 corresponding to the processing of a type 1, Proc_type "2" is connectable to the IP core 12 corresponding to the processing of a type 2, and the like. The "APL" describes an application type when a thread corresponds to a plurality of applications. The "STATE" describes whether the thread is active (used) or inactive (blank).

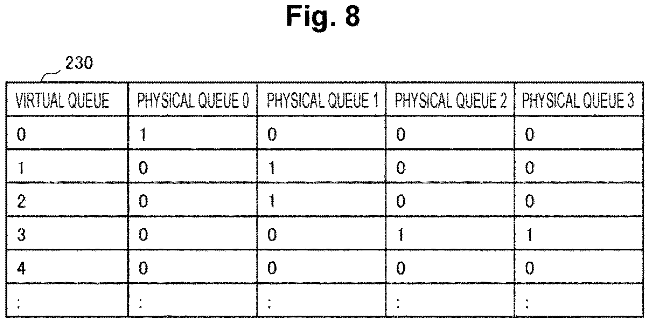

Fig. 8 is a diagram illustrating a logical-physical mapping table 230 of the proxy unit 140.

The logical-physical mapping table 230 allocates the physical queues (0 to 3) to the virtual queues (0 to 4). For example, the physical queue 0 is allocated to the virtual queue (0), and the physical queue 1 is allocated to the virtual queue (1). Note that it is also possible to allocate a plurality of physical queues (physical queues 2 and 3) to the virtual queue (3) .

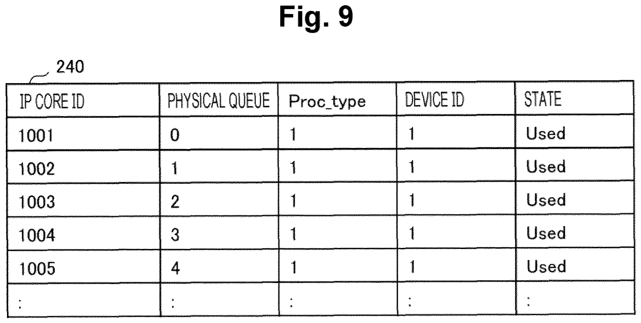

Fig. 9 is a diagram illustrating a physical queue table 240 of the proxy unit 140.

The "IP core ID" is an ID of a core that actually performs processing, and the "PHYSICAL QUEUE", "Proc_type", "DEVICE ID", and "STATE" are associated with each IP core ID. Proc_type describes that connection cannot be established unless processing of the same type is performed. The device ID indicates the type of accelerator to be processed by the accelerator, and describes, for example, that the accelerator 1 corresponds to the device ID "1".

### [Polling control]

### <Wake-up determination using packet arrival information>

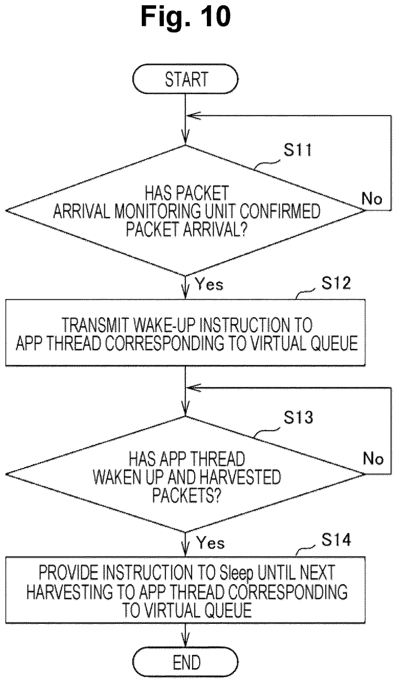

Fig. 10 is a flowchart illustrating wake-up determination processing using packet arrival information in polling control.

In Step S11, the polling control unit 120 determines whether or not the packet arrival monitoring unit 110 has confirmed a packet arrival. In a case in which the packet arrival has not been confirmed (S11: No), the processing returns to Step S11 to wait for a packet arrival.

In a case in which a packet arrival has been confirmed (S11: Yes), the polling control unit 120 transmits a wake-up instruction to an APP thread 15 corresponding to the virtual queue 200 in Step S12 (in the following description, the APP thread 15 is a thread in the polling control and thus described as a polling thread 15).

In Step S13, the polling control unit 120 determines whether or not the polling thread 15 has woken up and harvested packets. In a case in which packets have not been harvested (S13: No), the processing returns to Step S13 to wait for harvesting of packets.

In a case in which packets have been harvested (S13: Yes), the polling control unit 120 provides an instruction to sleep until the next harvesting to the polling thread 15 corresponding to the virtual queue 200 and ends the processing of this flow in Step S14.

### <Wake-up determination using timing information (statistics)>

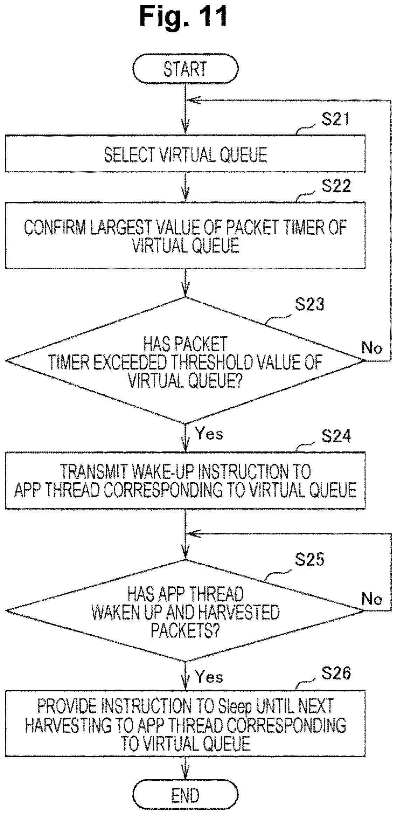

Fig. 11 is a flowchart illustrating wake-up determination processing using timing information (statistics) in polling control.

In Step S21, the polling control unit 120 selects a virtual queue 200.

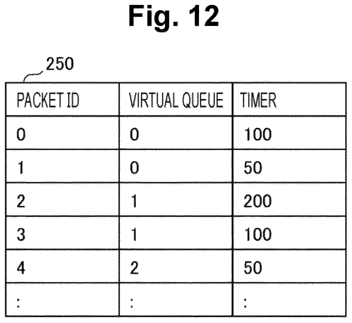

In Step S22, the polling control unit 120 confirms the largest value of a packet timer 250 (see Fig. 12) of the virtual queue 200.

Fig. 12 is a diagram illustrating the packet timer 250 of the virtual queue 200 in a form of table.

A virtual queue and a timer are set for each packet ID.

It is possible to set a wake-up timing at the time of a packet arrival in advance and to achieve an actual effect of the sleep control by setting a timer for each virtual queue 200.

Returning to Fig. 11, the polling control unit 120 determines whether or not the packet timer 250 has exceeded a threshold value of the virtual queues 200 in Step S23.

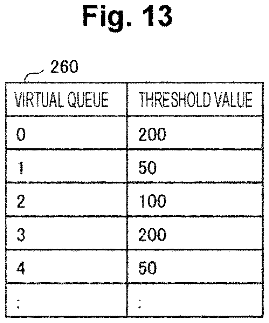

Fig. 13 is a diagram illustrating a threshold value table 260 of the virtual queues 200.

A threshold value regarding whether or not to perform harvesting is set for each virtual queue. For example, setting is made such that harvesting is not performed until the virtual queue (0) reaches the threshold value "200".

Returning to Fig. 11, in a case in which the packet timer 250 has not exceeded the threshold value of the virtual queues 200 (S23: No), the processing returns to Step S21 to repeat Step S21 and Step S22 until the packet timer 250 exceeds the threshold value of the virtual queues 200. The threshold value of the packet timer 250 is separately set on the basis of statistical information from the packet transmission to reception.

In a case in which the packet timer 250 has exceeded the threshold value of the virtual queues 200 (S23: Yes), the polling control unit 120 transmits a wake-up instruction to the polling thread corresponding to the virtual queue 200 in Step S24.

In Step S25, the polling control unit 120 determines whether or not the thread has woken up and has harvested packets. In a case in which packets have not been harvested (S25: No), the processing returns to Step S25 to wait for harvesting of packets.

In a case in which the thread has woken up and harvested the packets (S25: Yes), the polling control unit 120 provides an instruction to sleep until the next harvesting to the polling thread 15 corresponding to the virtual queue 200 and ends the processing of this flow in Step S26.

### [Packet transmission]

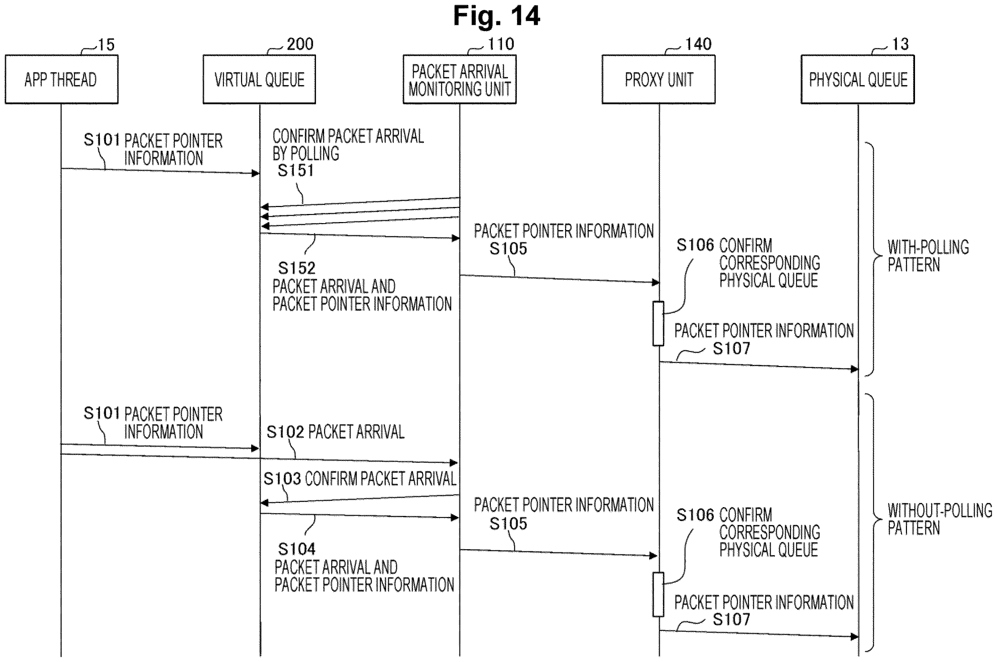

Fig. 14 is a control sequence diagram of packet transmission. This packet transmission has a <polling pattern> and a <without-polling pattern>. Note that this polling is polling between the packet arrival monitoring unit 110 and the virtual queue 200.

### <Polling pattern>

The APP thread 15 transmits packet pointer information to the virtual queue 200 (S101).

On the other hand, the packet arrival monitoring unit 110 confirms a packet arrival by polling (S151).

The virtual queue 200 notifies the packet arrival monitoring unit 110 of a "packet arrival" and "packet pointer information" (S152).

The packet arrival monitoring unit 110 receives the "packet arrival" and the "packet pointer information" from the virtual queue 200 and transmits the "packet pointer information" to the proxy unit 140 (S105).

The proxy unit 140 receives the "packet pointer information" and confirms the physical queue 13 corresponding to the virtual queue 200 (S106).

The proxy unit 140 transmits the "packet pointer information" to the physical queue 13 (S107).

In the packet transmission based on the <polling pattern> (with-polling pattern), no notification is provided to the controller 100 as in the <without-polling pattern> described below.

### <Without-polling pattern>

The same procedures as those of the <polling pattern> are denoted by the same step numbers.

The APP thread 15 transmits packet pointer information to the virtual queue 200 (S101) and notifies the packet arrival monitoring unit 110 of the "packet arrival" (S102).

The packet arrival monitoring unit 110 receives the "packet arrival" from the APP thread 15 and performs packet arrival confirmation for the virtual queue 200 (S103). The virtual queue 200 transmits the "packet arrival" and the "packet pointer information" to the packet arrival monitoring unit 110 (S104).

The packet arrival monitoring unit 110 receives the "packet arrival" and the "packet pointer information" from the virtual queue 200 and transmits the "packet pointer information" to the proxy unit 140 (S105).

The proxy unit 140 receives the "packet pointer information" and confirms the physical queue 13 corresponding to the virtual queue 200

(S106). The proxy unit 140 transmits the "packet pointer information" to the physical queue 13 (S107).

### [Packet reception/polling control]

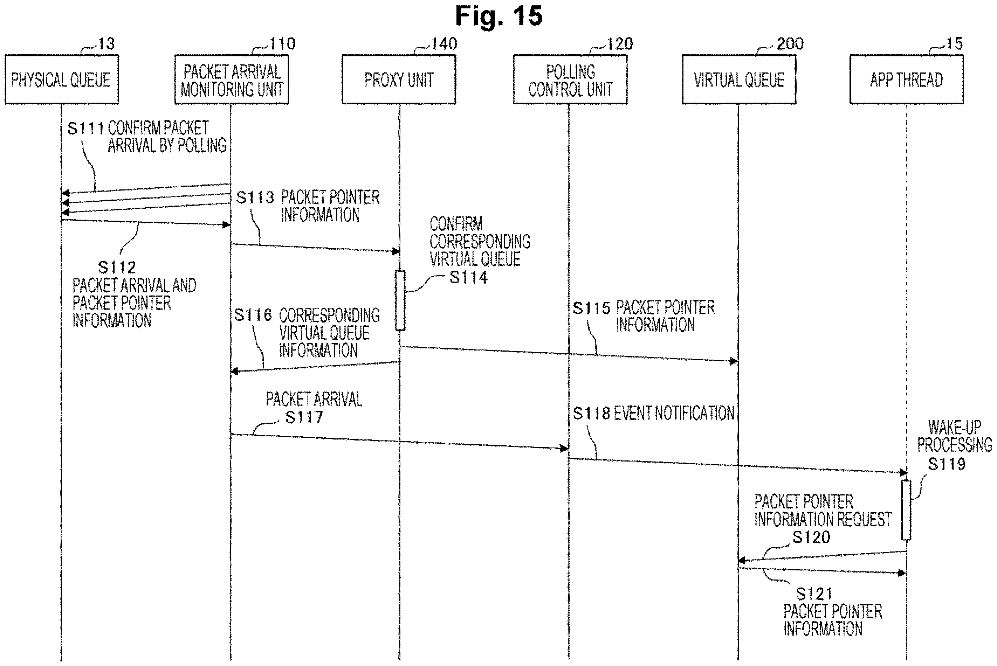

Fig. 15 is a control sequence diagram of packet reception/polling.

The packet arrival monitoring unit 110 confirms a packet arrival for the physical queue 13 by polling (S111). The physical queue 13 transmits the "packet arrival" and the "packet pointer information" to the packet arrival monitoring unit 110 (S112).

The packet arrival monitoring unit 110 receives the "packet arrival" and the "packet pointer information" from the physical queue 13 and transmits the "packet pointer information" to the proxy unit 140 (S113).

The proxy unit 140 receives the "packet pointer information" and confirms the virtual queue 200 corresponding to the physical queue 13 (S114).

The proxy unit 140 transmits the "packet pointer information" to the virtual queue 200 (S115) and transmits "corresponding virtual queue information" to the packet arrival monitoring unit 110 (S116).

The packet arrival monitoring unit 110 receives the "corresponding virtual queue information" from the proxy unit 140 and transmits the "packet arrival" to the polling control unit 120 (S117).

The polling control unit 120 receives the "packet arrival" from the packet arrival monitoring unit 110 and provides an "event notification" to the APP thread 15 (S118).

The APP thread 15 performs "wake-up processing" (S119).

The APP thread 15 requests "packet pointer information" from the virtual queue 200 (S120). The virtual queue 200 receives the request and transmits the "packet pointer information" to the virtual queue 200 (S121).

### [IP core scale-in]

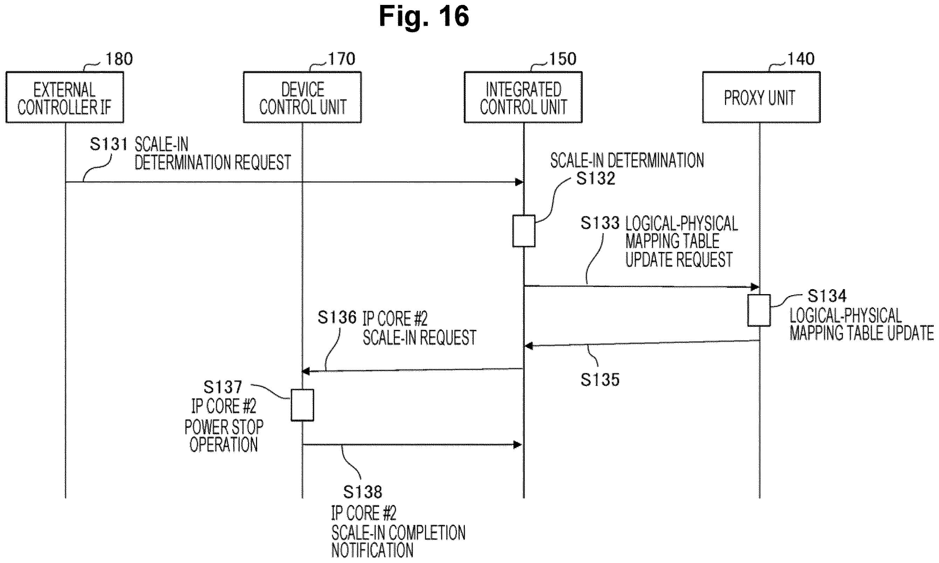

Fig. 16 is a control sequence diagram of IP core scale-in.

The external controller IF 180 provides a "scale-in determination request" to the integrated control unit 150 (S131).

The integrated control unit 150 performs scale-in determination (S132).

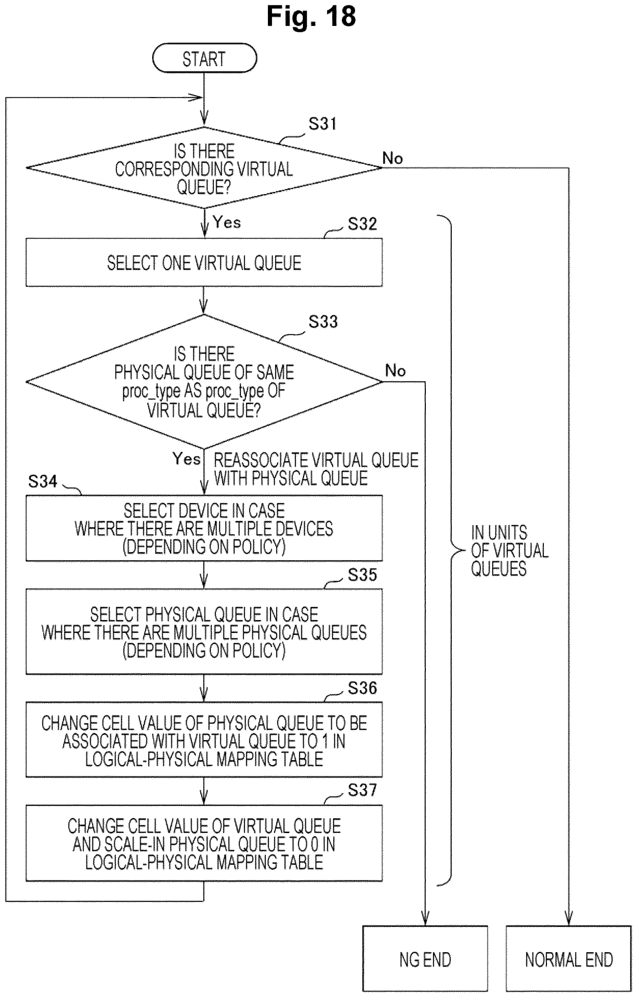

The integrated control unit 150 provides a "logical-physical mapping table update request" to the proxy unit 140 (S133). The proxy unit 140 updates the logical-physical mapping table 230 (see Fig. 8) (see the update of the logical-physical mapping table in Fig. 18) and notifies the integrated control unit 150 of the update (S135).

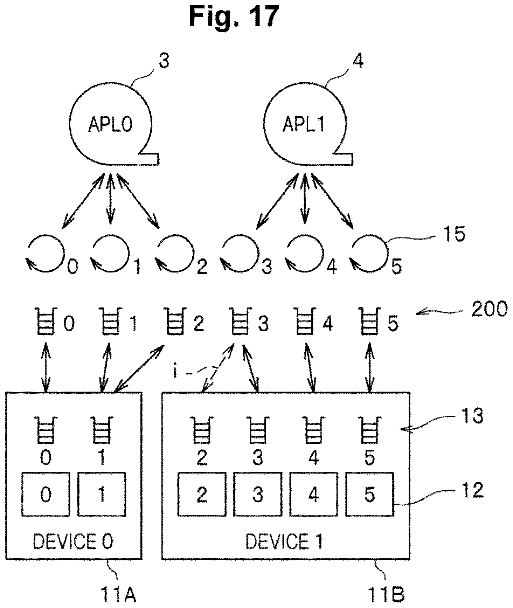

The IP core scale-in processing is exemplified using a case in which the IP core #2 is scaled in from among IP cores 12 (see Fig. 17).

The integrated control unit 150 provides an "IP core #2 scale-in request" to the device control unit 170 (S136). The device control unit 170 performs a power stop operation of the IP core #2 (S137) and notifies the integrated control unit 150 of "completion of the scale-in of the IP core #2" (S138).

Fig. 17 is a diagram for explaining the IP core scale-in in Fig. 16. The same components as those in Fig. 5 are denoted by the same reference signs as those in Fig. 5.

The IP core #2 is scaled in by IP core scale-in processing in Fig. 16 (see the dashed line arrow h in Fig. 17).

Fig. 18 is a flowchart illustrating the logical-physical mapping table update processing.

In Step S31, the proxy unit 140 determines whether or not there is a virtual queue 200 corresponding to the physical queue to be scaled in. In a case in which there is no corresponding virtual queue 200 (S31: No), the logical-physical mapping table update processing of this flow is ended normally.

In a case in which there is a corresponding virtual queue 200 (S31: Yes), the proxy unit 140 selects one virtual queue 200 in Step S32.

In Step S33, the proxy unit 140 determines whether or not there is a physical queue 13 of the same proc-type as that of the virtual queue 200. In a case in which there is no physical queue 13 of the same proc-type as that of the virtual queue 200 (S33: No), the logical-physical mapping table update processing of this flow is ended as NG.

In a case in which there is a physical queue 13 of the same proc_type as that of the virtual queue 200 in Step S33 described above (S33: Yes), determination is made to reassociate the virtual queue 200 with the physical queue 13, and the proxy unit 140 selects a device in a case in which there are a plurality of devices in Step S34 depending on a policy. This policy is, for example, a policy of concentration on a device with a high load (consolidation) as much as possible or distribution to a device with a low load (load distribution).

In Step S35, the proxy unit 140 selects a physical queue 13 in a case in which there are a plurality of physical queues 13 depending on a policy. This policy is, for example, a policy of concentration on a physical queue with a high load (consolidation) as much as possible or distribution to a physical queue with a low load (load distribution).

In Step S36, the proxy unit 140 changes a cell value of the physical queue 13 to be associated with the virtual queue 200 to "1" in the logical-physical mapping table 230 (see Fig. 8).

In Step S37, the proxy unit 140 changes the cell value of the virtual queue 200 and the scale-in physical queue 13 to "0" in the logical-physical mapping table 230 and returns to Step S31 described above.

### [Thread scale-in]

Fig. 19 is a control sequence diagram of the thread scale-in.

The external controller IF 180 provides a "scale-in determination request" to the integrated control unit 150 (S141).

The integrated control unit 150 performs scale-in determination (S142).

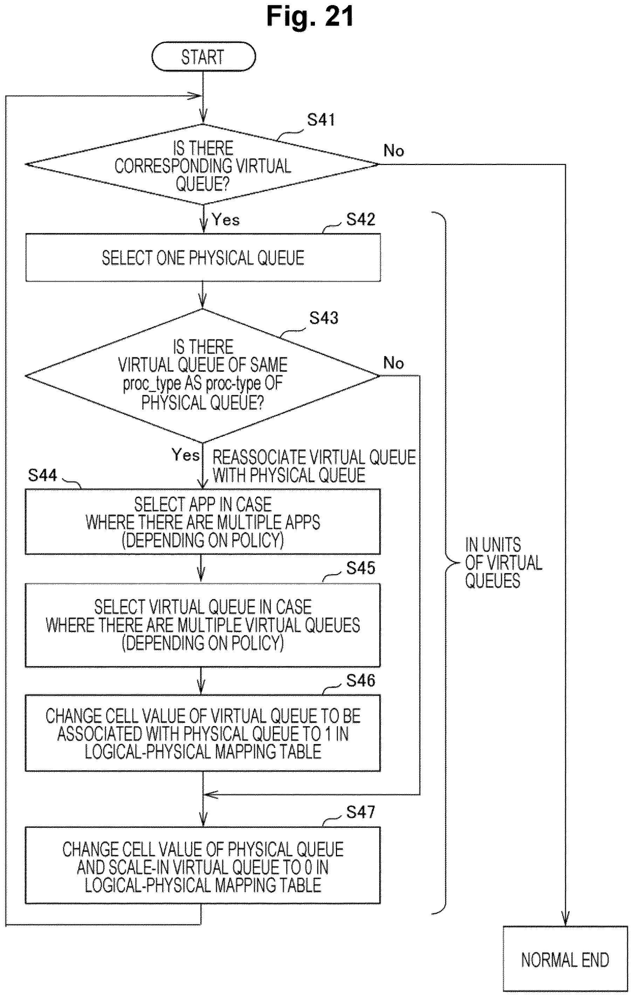

The integrated control unit 150 provides a "logical-physical mapping table update request" to the proxy unit 140 (S143). The proxy unit 140 updates the logical-physical mapping table 230 (see Fig. 8) (see the update of the logical-physical mapping table in Fig. 21) and notifies the integrated control unit 150 of the update (S145).

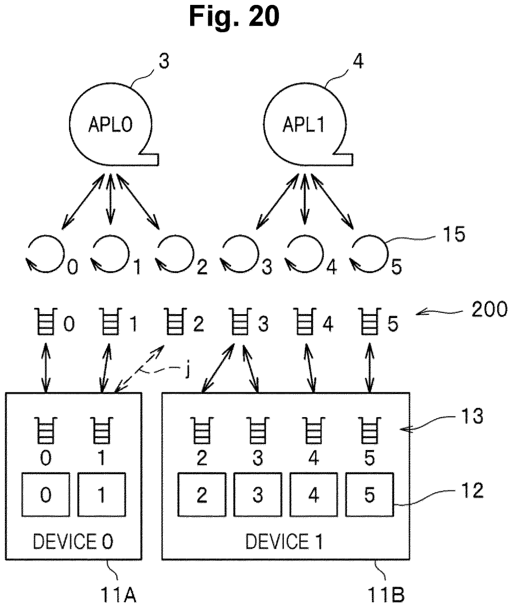

The thread scale-in processing is exemplified with a case in which the thread #2 is scaled in from among the APP threads 15 (see Fig. 20).

The integrated control unit 150 provides a "thread #2 scale-in request" to the device control unit 170 (S146). The device control unit 170 performs a polling stop operation of the thread #2 (S147) and notifies the integrated control unit 150 of "completion of the scale-in of the thread #2" (S148).

Fig. 20 is a diagram for explaining the thread scale-in. The same components as those in Figs. 5 and 17 are denoted by the same reference numerals.

The thread #2 illustrated in Fig. 20 is scaled in by the thread scale-in processing in Fig. 19 (see the dashed line arrow "j" in Fig. 20).

Fig. 21 is a flowchart illustrating the logical-physical mapping table update processing.

In Step S41, the proxy unit 140 determines whether or not there is a physical queue 13 corresponding to the virtual queue to be scaled in. In a case in which there is no corresponding physical queue 13 (S41: No), the logical-physical mapping table update processing of this flow is ended normally.

In a case in which there is a corresponding physical queue 13 (S41: Yes), the proxy unit 140 selects one physical queue 13 in Step S42.

In Step S43, the proxy unit 140 determines whether or not there is a virtual queue 200 of the same proc-type as that of the physical queue 13. In a case in which there is no virtual queue 200 of the same proc_type as that of the physical queue 13 (S43: No), the processing proceeds to Step S47.

In a case in which there is a virtual queue 200 of the same proc_type as that of the physical queue 13 in Step S43 described above (S43: Yes), determination is made to reassociate the virtual queue 200 with the physical queue 13, and the proxy unit 140 selects an APP in a case in which there are a plurality of Apps in Step S44 depending on a policy. This policy is, for example, a policy of concentration on an APL with a high load (consolidation) as much as possible or distribution to an APL with a low load (load distribution).

In Step S45, the proxy unit 140 selects a virtual queue 200 in a case in which there are a plurality of virtual queues 200 depending on a policy. This policy is, for example, a policy of concentration on a virtual queue with a high load (consolidation) as much as possible or distribution to a virtual queue with a low load (load distribution).

In Step S46, the proxy unit 140 changes a cell value of the virtual queue 200 to be associated with the physical queue 13 to "1" in the logical-physical mapping table 230 (see Fig. 8).

In Step S47, the proxy unit 140 changes the cell value of the physical queue 13 and the scale-in virtual queue 200 to "0" in the logical-physical mapping table 230 and returns to Step S42 described above.

### [Hardware configuration]

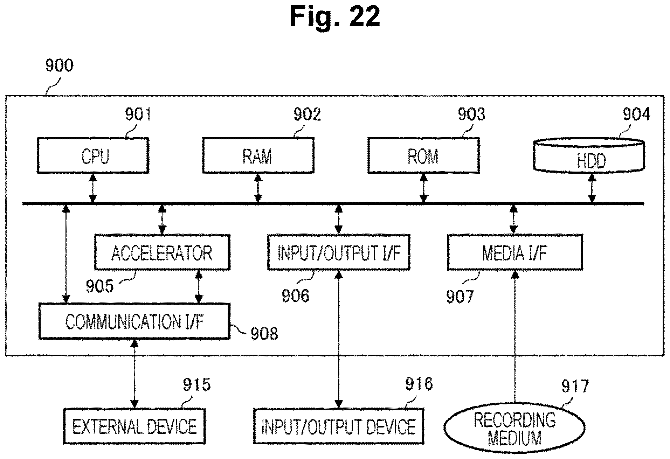

The controller (on-server data transmission device) 100 according to the above embodiment is implemented by a computer 900 with a configuration as illustrated in Fig. 22, for example.

Fig. 22 is a hardware configuration diagram illustrating an example of the computer 900 that implements functions of the controller 100.

The computer 900 includes a CPU 901, a RAM 902, a ROM 903, an HDD 904, an accelerator 905, an input/output interface (I/F) 906, a media interface (I/F) 907, and a communication interface (I/F) 908. The accelerator 905 corresponds to the accelerator 11 in Figs. 1, 3, and 5.

The accelerator 905 is an accelerator (device) 11 (Figs. 1 and 5) that processes at least one of data from the communication I/F 908 and data from the RAM 902 at high speed. Note that the accelerator 905 of a type (look-aside type) that executes processing from the CPU 901 or the RAM 902 and then returns the execution result to the CPU 901 or the RAM 902 may be used. On the other hand, an accelerator 905 of a type (in-line type) that is interposed to perform processing between the communication I/F 908 and the CPU 901 or the RAM 902 may also be used.

The accelerator 905 is connected to an external device 915 via the communication I/F 908. The input/output I/F 906 is connected to an input/output device 916. The media I/F 907 reads and writes data from and to a recording medium 917.

The CPU 901 operates according to a program stored in the ROM 903 or the HDD 904 and controls each component of the controller 100 illustrated in Figs. 1, 3, and 5 by executing the program (also called as an application or an APP as an abbreviation thereof) read in the RAM 902. Then, the program can be distributed via a communication line or recorded in the recording medium 917 such as a CD-ROM to be distributed.

The ROM 903 stores a boot program to be executed by the CPU 901 when the computer 900 is activated, a program depending on the hardware of the computer 900, and the like.

The CPU 901 controls an input/output device 916 that includes an input unit such as a mouse and a keyboard and an output unit such as a display and a printer via the input/output I/F 906. The CPU 901 acquires data from the input/output device 916 and outputs generated data to the input/output device 916 via the input/output I/F 906. Note that a graphics processing unit (GPU) or the like may be used as a processor in conjunction with the CPU 901.

The HDD 904 stores a program to be executed by the CPU 901, data to be used by the program, and the like. The communication I/F 908 receives data from another device via a communication network (for example, network (NW)), outputs the data to the CPU 901, and transmits data generated by the CPU 901 to another device via the communication network.

The media I/F 907 reads a program or data stored in the recording medium 917 and outputs the program or data to the CPU 901 via the RAM 902. The CPU 901 loads a program related to target processing from the recording medium 917 onto the RAM 902 via the media I/F 907 and executes the loaded program. The recording medium 917 is an optical recording medium such as a digital versatile disc (DVD) or a phase change rewritable disk (PD), a magneto-optical recording medium such as a magneto optical disk (MO), a magnetic recording medium, a conductor memory tape medium, a semiconductor memory, or the like.

In a case in which the computer 900 functions, for example, as an on-server data transmission device 100 configured as a device according to the present embodiment, the CPU 901 of the computer 900 implements the functions of the controller (on-server data transmission device) 100 by executing the program loaded on the RAM 902. Also, the HDD 904 stores data in the RAM 902. The CPU 901 reads the program related to the target processing from the recording medium 917 and executes the program. In addition to this, the CPU 901 may read the program related to the target processing from another device via the communication network.

### [Effects]

As described above, the on-server data transmission device according to the present embodiment is an on-server data transmission device (controller 100) that transmissions data from a device including the accelerator 11 to the application 20 when the device is used for the application 20 and includes: the packet arrival monitoring unit 110 that monitors communication between the device and the APP thread 15 corresponding to the application 20 and measures a packet arrival timing; and the polling control unit 120 that wakes up the APP thread 15 and causes the APP thread 15 to perform packet processing when the packet arrival monitoring unit 110 has detected the packet arrival and causes the APP thread 15 to sleep when there is no packet arrival.

In this manner, a configuration in which the controller (on-server data transmission device) 100 including the packet arrival monitoring unit 110 and the polling control unit 120 intervenes in the application 20 and the accelerator 11 is adopted.

Since the controller 100 can monitor the packet arrival from the accelerator 11 by polling as a representative, it is not necessary for each APP thread 15 to monitor the packet arrival by polling, and power consumption can thus be reduced.

Since the controller 100 can monitor the communication of all the APP threads 15, it is possible to enhance efficiency of the polling of all the APP threads 15 and to reduce power consumption of the entire server.

Also, the controller 100 can reduce a delay by a method of providing an event notification to the APP thread 15 at the time of a packet arrival, a method of providing an event notification on the basis of timing information from statistical data regarding packet transmission/reception intervals, or the like.

Furthermore, the following effects are obtained by applying the present system to a case when a plurality of network applications that use an accelerator such as a virtual radio access network (vRAN) or the like to increase a speed of data processing are mounted on the same server.

Power saving: It is not necessary for each APP thread 15 to perform polling, and power consumption of the CPU core can thus be significantly reduced.

Efficiency (dynamic aspect): In a case in which demand greatly changes such as a daytime and a nighttime, it is possible to reduce power consumption by stopping unnecessary resources by IP core scale-in or thread scale-in.

Efficiency (static aspect): In a case in which the accelerator 11 has remaining CPU power, the number of users that can be accommodated in the accelerator can be increased by associating virtual queues of a plurality of applications with one physical queue.

The on-server data transmission device (controller) 100 according to the embodiment includes: the pseudo device unit 130 that causes the APP thread 15 to perform packet processing by using the virtual queue 200 instead of a physical queue of the device in correspondence with the physical queue and thereby connects the device to the application 20; and the proxy unit 140 that dynamically changes connection between the virtual queue 200 and the physical queue 13.

In this manner, the pseudo device unit 130 and the proxy unit 140 are included, and the pseudo device unit 130 provides the virtual queue 200 instead of the physical queue 13 to the application. Since this appears to communicate with the actual accelerator 11 from the application 20, no revision is needed.

The controller 100 manages association between an APP thread 15 and IP cores 12 of the plurality of accelerators 11 and communicates with the accelerators 11 instead of the application 20. The controller 100 can dynamically change resources such as an increase (scale-out) and a decrease (scale-in) in the IP cores 12 and the APP threads 15 in response to a demand by changing association of the physical queue 13 with the virtual queue 200 and providing an instruction to increase or decrease the IP cores 12 and the APP threads 15.

Furthermore, more flexible resource management and resource consolidation based on superimposition by associating a plurality of physical queues with one APP thread 15 (1:N) and associating one physical queue with a plurality of APP thread (M:1).

Note that, among the processes described in the above embodiment, all or some of the processes described as those to be automatically performed may be manually performed, or all or some of the processes described as those to be manually performed may be automatically performed by a known method. In addition to this, information including the processing procedures, the control procedures, the specific names, the various kinds of data, and the parameters mentioned above in the specification or shown in the drawings can be modified as desired, unless otherwise particularly specified.

In addition, each component of each device that has been illustrated is functionally conceptual and is not necessarily physically configured as illustrated. In other words, a specific configuration of distribution and integration of individual devices is not limited to the illustrated configuration, and all or part of the configuration can be functionally or physically distributed and integrated in any unit according to various loads, usage conditions, and the like.

Further, some or all of the component, functions, processing units, processing means, and the like described above may be implemented by hardware, for example, by designing them in an integrated circuit. Also, the respective components, functions, and the like may be implemented by software for interpreting and executing a program for causing a processor to implement the respective functions. Information such as a program, a table, and a file for implementing the respective functions can be held in a recording device such as a memory, a hard disk, or a solid state drive (SSD), or in a recording medium such as an integrated circuit (IC) card, a secure digital (SD) card, or an optical disc.

### Reference Signs List

10: HW
11, 905: Accelerator (device)
12: IP core (device core)
14: Packet processing API
17, 18: Ring Buffer
15: APP thread (polling thread)
20: Application (APL)
100: Controller (on-server data transmission device)
110: Packet arrival monitoring unit
120: Polling control unit
130: Pseudo device unit
140: Proxy unit
150: Integrated control unit
160: APP control unit
170: Device control unit
180: External controller IF
220: Virtual queue table
230: Logical-physical mapping table
240: Physical queue table
250: Packet timer
260: Threshold value table
1000: On-server data transmission system
APL1, APL2: Application

## Claims

1. An on-server data transmission device that transmits data from a device including an accelerator to an application when the device is used for the application, the on-server data transmission device comprising:
a packet arrival monitoring unit that monitors communication between the device and an APP (application) thread corresponding to the application and measures a packet arrival timing; and
a polling control unit that wakes up the App thread and causes the APP thread to perform packet processing at a time of packet arrival at which the packet arrival monitoring unit detects the packet arrival; and causes the APP thread to sleep when there is no packet arrival.

2. The on-server data transmission device according to claim 1, comprising:
a pseudo device unit that corresponds to a physical queue and causes the APP thread to perform packet processing by using a virtual queue instead of the physical queue of the device and thereby connects the device to the application; and
a proxy unit that dynamically changes connection between the virtual queue and the physical queue.

3. An on-server data transmission method of an on-server data transmission device that transmits data from a device including an accelerator to an application when the device is used for the application, the on-server data transmission device executing:
monitoring communication between the device and an APP (application) thread corresponding to the application and measuring a packet arrival timing; and
waking up the APP thread and causing the APP thread to perform packet processing at a time of packet arrival at which arrival of a packet is detected and causing the APP thread to sleep when there is no packet arrival.

4. A program that causes a computer serving as an on-server data transmission device that transmits data from a device including an accelerator to an application when the device is used for the application to execute:
a packet arrival monitoring of monitoring communication between the device and an APP (application) thread corresponding to the application and measuring a packet arrival timing; and
a polling control of waking up the APP thread and causing the APP thread to perform packet processing at the time of packet arrival at which arrival of a packet is detected and causing the APP thread to sleep when there is no packet arrival.
